# EUROPÄISCHE PATENTANMELDUNG

(11) **EP 4 656 061 A1**
(43) Veröffentlichungstag der Anmeldung: **03.12.2025**
(21) Anmeldenummer: 24179328.0
(22) Anmeldetag: 31.05.2024
(51) Int. Cl.: A23L 3/3409, A23B 7/144, A23L 3/3445, H01M 12/02, H01M 12/06

(54) **VERFAHREN UND SYSTEM ZUR KONTROLLIERTEN FREISETZUNG EINES WIRKSTOFFS ZUR ERHALTUNG UND/ODER VERBESSERUNG DER LAGER- UND/ODER TRANSPORTFÄHIGKEIT VON PFLANZLICHEN UND/ODER TIERISCHEN PRODUKTEN**

(71) Anmelder: simatec ag, 3390 Wangen an der Aare (CH)
(72) Erfinder: Oehl, Michael Christian, 4156 Reinach (CH); Angliker, Marco, 8053 Zürich (CH)
(74) Vertreter: Fischer, Michael

(57) **Zusammenfassung**

Der Erfindung liegt die Aufgabe zugrunde, ein Verfahren und ein System zum Ausbringen eines einen Wirkstoff enthaltenden Wirkstoff-Fluids, insbesondere eines pflanzen- und/oder insektenwirksamen Wirkstoffes, abzugeben, mit dem eine verbesserte Abgabe des Wirkstoffs zur Erreichung der mit dem Wirkstoff verbundenen Ziele vorgenommen werden kann.

Diese Aufgabe wird erfindungsgemäss durch ein Verfahren und ein System zur Freisetzung eines Wirkstoffs zur Erhaltung und/oder Verbesserung der Lager- und/oder Transportfähigkeit von pflanzlichen und/oder tierischen Produkten gelöst, umfassend:
a) Vorgeben einer Soll-Konzentration des Wirkstoffs innerhalb eines vorbestimmbaren Lager- und/oder Transportvolumens und/oder eines zeitlichen Verlaufs einer Soll-Konzentration des Wirkstoffs innerhalb eines vorbestimmbaren Lager- und/oder Transportvolumens;
b) räumlich verteiltes Anordnen von Wirkstoffabgabemodulen zur Wirkstoffabgabe innerhalb des Lager- und/oder Transportvolumens in Abhängigkeit von der Soll-Konzentration des Wirkstoffs und/oder von dem zeitlichen Verlauf der Soll-Konzentration des Wirkstoffs;
c) Ausrüsten der Wirkstoffabgabemodule zur Wirkstoffabgabe mit jeweils einem Treibermodul, umfassend eine elektrochemische Gasentwicklungszelle und ein die Gasungsrate des von der Gasentwicklungszelle generierten Gases steuerndes Steuerungsmodul und ein mit dem Treibermodul verbindbares Wirkstoffmodul, umfassend einen Behälter für das den Wirkstoff enthaltende Wirkstofffluid mit einem Wirkstoffauslass, wobei ein von dem mittels der Gasentwicklungszelle generierten Gases aufgebauter Förderdruck eine Wirkstoffabgabe an den Wirkstoffauslass bewirkt; und
d) Einstellen der gewünschten Gasungsrate bzw. des gewünschten Verlaufs der Gasungsrate an den Steuerungsmodulen zur Abgabe des Wirkstofffluids zur Erreichung der Soll-Konzentration des Wirkstoffs und/oder des zeitlichen Verlaufs der Soll-Konzentration des Wirkstoffs.

Durch die dezentrale Abgabe des Wirkstoffs an mehreren Orten innerhalb des Lager- und/oder Transportvolumens ist eine gleichmässige und konstante Behandlung der Produkte möglich. Dabei ist auch die Tatsache, dass das Lager- und/oder Transportvolumen immer wieder gelüftet und/oder geöffnet wird, kein Problem, weil die Luft innerhalb des Lager- und/oder Transportvolumens nur wenig mit Frischluft verdünnt wird und die Abgabe des Wirkstoffs dezentral und in unmittelbare Nähe zu den Produkten erfolgt und somit die Konzentration des Wirkstoffs in unmittelbarer Nähe zu den Produkten nur wenig beeinflusst wird.

## Beschreibung

Die vorliegende Erfindung betrifft ein Verfahren und ein System zur kontrollierten Freisetzung eines Wirkstoffs zur Erhaltung und/oder Verbesserung der Lager- und/oder Transportfähigkeit von pflanzlichen und/oder tierischen Produkten, wie beispielsweise Ernteerzeugnissen (Obst, Gemüse, Getreide, Reis etc.)

Oft bestehen bei der Erzeugung von pflanzlichen und/oder tierischen Produkten grosse Zeitunterschiede zwischen dem Zeitpunkt der Erzeugung, beispielsweise durch Ernte oder Schlachtung, und dem eigentlichen Verbrauch dieser Produkte. Ernteerzeugnisse, wie Kartoffeln, Karotten, Zwiebeln, Äpfeln etc. werden in grossen Kühlhäusern oft über mehrere Monate gelagert. Dabei bestehen hohe Anforderungen an die klimatischen und/oder pharmakologischen Verhältnisse in diesen Kühlhäusern. Oft müssen hierbei auch zusätzliche Wirkstoffe eingesetzt werden, die beispielsweise Pilzerkrankungen oder Austrieb an den Ernteerzeugnissen unterdrücken bzw. zumindest hemmen.

Auf dem Markt erhältliche Vorrichtungen zur Abgabe von Wirkstoffen oder anderen förderbaren Stoffen, die zur Erhaltung oder Begünstigung der Ernteerzeugnissen (z.B. Kartoffeln, Karotten, Zwiebeln, Äpfel etc.) während dessen Transport und im Besonderen während der Lagerung eingesetzt werden, sind in der Regel zentral installiert, komplex in der Anwendung und erzeugen nicht vollkommen zufriedenstellende Resultate.

Die Abgabe von meist essentiellen Ölen erfolgt mittels Kalt - oder Heissverdampfern, welche ausserhalb des Lagerraums installiert sind. Dabei wird der Wirkstoff über ein Rohr vernebelt und durch eine Öffnung in den Lagerraum zugeführt. Die Anwendung erfordert viel Erfahrung, ist aufwändig und löst das Problem nur begrenzt. Ausserdem stellt die Heissvernebelung ein Sicherheitsrisiko dar und erfordert zusätzliche Massnahmen um diese sachgerecht zu kontrollieren.

Der Erfindung liegt daher die Aufgabe zugrunde, ein Verfahren und ein System zum Ausbringen eines einen Wirkstoff enthaltenden Wirkstoff-Fluids, insbesondere eines pflanzen- und/oder insektenwirksamen Wirkstoffes, abzugeben, mit dem eine verbesserte Abgabe des Wirkstoffs zur Erreichung der mit dem Wirkstoff verbundenen Ziele vorgenommen werden kann.

Diese Aufgabe wird bezüglich des Verfahrens erfindungsgemäss durch ein Verfahren zur Freisetzung eines Wirkstoffs zur Erhaltung und/oder Verbesserung der Lager- und/oder Transportfähigkeit von pflanzlichen und/oder tierischen Produkten gelöst, welches die folgenden Verfahrensschritte umfasst:
a) Vorgeben einer Soll-Konzentration des Wirkstoffs innerhalb eines vorbestimmbaren Lager- und/oder Transportvolumens und/oder eines zeitlichen Verlaufs einer Soll-Konzentration des Wirkstoffs innerhalb eines vorbestimmbaren Lager- und/oder Transportvolumens;
b) räumlich verteiltes Anordnen von Wirkstoffabgabemodulen zur Wirkstoffabgabe innerhalb des Lager- und/oder Transportvolumens in Abhängigkeit von der Soll-Konzentration des Wirkstoffs und/oder von dem zeitlichen Verlauf der Soll-Konzentration des Wirkstoffs;
c) Ausrüsten der Wirkstoffabgabemodule zur Wirkstoffabgabe mit jeweils einem Treibermodul, umfassend eine elektrochemische Gasentwicklungszelle und ein die Gasungsrate des von der Gasentwicklungszelle generierten Gases steuerndes Steuerungsmodul und ein mit dem Treibermodul verbindbares Wirkstoffmodul, umfassend einen Behälter für das den Wirkstoff enthaltende Wirkstofffluid mit einem Wirkstoffauslass, wobei ein von dem mittels der Gasentwicklungszelle generierten Gases aufgebauter Förderdruck eine Wirkstoffabgabe an den Wirkstoffauslass bewirkt; und
d) Einstellen der gewünschten Gasungsrate bzw. des gewünschten Verlaufs der Gasungsrate an den Steuerungsmodulen zur Abgabe des Wirkstofffluids zur Erreichung der Soll-Konzentration des Wirkstoffs und/oder des zeitlichen Verlaufs der Soll-Konzentration des Wirkstoffs.

Bezüglich des Systems wird diese Aufgabe erfindungsgemäss durch ein System zur Freisetzung eines Wirkstoffs zur Erhaltung und/oder Verbesserung der Lager- und/oder Transportfähigkeit von pflanzlichen und/oder tierischen Produkten gelöst, welches die folgenden Komponenten umfasst:
a) eine Kontrolleinheit zum Vorgeben einer Soll-Konzentration des Wirkstoffs innerhalb eines vorbestimmbaren Lager- und/oder Transportvolumens und/oder eines zeitlichen Verlaufs einer Soll-Konzentration des Wirkstoffs innerhalb eines vorbestimmbaren Lager- und/oder Transportvolumens;
b) räumlich innerhalb des Lager- und/oder Transportvolumens verteilte Wirkstoffabgabemodule zur Wirkstoffabgabe in Abhängigkeit von der Soll-Konzentration des Wirkstoffs und/oder von dem zeitlichen Verlauf der Soll-Konzentration des Wirkstoffs;
c) mindestens eines der Wirkstoffabgabemodule zur Wirkstoffabgabe umfassend ein Treibermodul, welches eine elektrochemische Gasentwicklungszelle und ein die Gasungsrate des von der Gasentwicklungszelle generierten Gases steuerndes Steuerungsmodul umfasst und ein mit dem Treibermodul verbindbares Wirkstoffmodul, welches einen Behälter für das den Wirkstoff enthaltende Wirkstofffluid mit einem Wirkstoffauslass umfasst, wobei ein von dem mittels der Gasentwicklungszelle generierten Gases aufgebauter Förderdruck eine Wirkstoffabgabe an den Wirkstoffauslass bewirkt; und wobei
d) die gewünschte Gasungsrate bzw. der gewünschte Verlauf der Gasungsrate an den Steuerungsmodulen zur Abgabe des Wirkstofffluids zur Erreichung der Soll-Konzentration des Wirkstoffs und/oder des zeitlichen Verlaufs der Soll-Konzentration des Wirkstoffs einstellbar ist.

Durch die dezentrale Abgabe des Wirkstoffs an mehreren Orten innerhalb des Lager- und/oder Transportvolumens ist eine gleichmässige und konstante Behandlung der Produkte möglich. Dabei ist auch die Tatsache, dass das Lager- und/oder Transportvolumen immer wieder gelüftet und/oder geöffnet wird, kein Problem, weil die Luft innerhalb des Lager- und/oder Transportvolumens nur wenig mit Frischluft verdünnt wird und die Abgabe des Wirkstoffs dezentral und in unmittelbare Nähe zu den Produkten erfolgt und somit die Konzentration des Wirkstoffs in unmittelbarer Nähe zu den Produkten nur wenig beeinflusst wird. Dabei können beispielsweise bestimmte Lager- und/oder Transportbehältnisse jeweils mit einem Wirkstoffabgabemodul ausgerüstet werden, sodass sich bei einer Vielzahl von angeordneten Lager- und Transportbehältnissen eine gleichmässige Verteilung des Wirkstoffs erzielen lässt. So kann beispielsweise jedes vierte/sechste/zehnte eingelagerte und/oder transportierte Behältnis mit einem Wirkstoffabgabemodul ausgerüstet sein. Weiter vorteilhaft ist die Aufrechterhaltung der erforderlichen Konzentration des Wirkstoffs, die sich auch bei Zunahme oder Abnahme der eingestellten Menge des Produkts durch eine entsprechende Zunahme bzw. Abnahme von Wirkstoffabgabemodulen widerspiegelt.

In einer vorteilhaften Ausgestaltung der vorliegenden Erfindung kann mindestens eine Anzahl der Steuerungsmodule, vorzugsweise auch die Gesamtheit der Steuerungsmodule, über eine drahtlose Kommunikation von einer Kontrolleinheit angesteuert werden. Dies kann dabei eine generelle Kommunikation zur Übertragung von Dosierdaten an alle Steuerungsmodule sein. Es kann aber auch vorgesehen sein, individuelle Steuerungsmodule direkt anzusprechen, um beispielsweise lokal höhere oder niedrigere Dosierungen des Wirkstoffs, vorzugsweise auch in Antwort auf die Detektion von für die Dosierung des Wirkstoff relevanten Daten (Auftreten von Pilzsporen und/oder Fäulnis-Indikatoren, Detektion von Keimbildung etc.), zu erzielen.

In zweckmässiger Weiterbildung der Erfindung kann mindestens eine Detektionseinheit zur Messung der Konzentration des Wirkstoffs und/oder zur Messung von produktspezifischen Parametern, wie z.B. Temperatur, Luftdruck, Luftfeuchtigkeit, Pilzsporenkonzentration, Bakterienkonzentration, Insektenbefall, etc., innerhalb des Lager- und/oder Transportvolumens angeordnet sein. Grundsätzlich können auch Kamerasysteme und/oder Lichtwellen/Lichtschranken eingesetzt werden, die beispielsweise direkte Veränderungen am Lagerprodukt erkennen können, wie z.B. Fäule, Austrieb, Keimung, etc. Dabei können die von der Detektionseinheit gemessenen Werte zur Rückkopplung der Dosierung des Wirkstoffs von der Kontrolleinheit zur Steuerung eines oder mehrerer der Steuerungsmodule verwendet werden. Es kann aber auch zusätzlich oder alternativ dazu vorgesehen sein, dass die von der Detektionseinheit gemessenen Werte zur Rückkopplung der Dosierung des Wirkstoffs direkt zur Steuerung eines oder mehrerer der Steuerungsmodule, die mit dieser Detektionseinheit assoziiert sind, verwendet werden.

Somit können mittels zusätzlichen Sensoren Daten im Lager- und/oder Transportvolumen global sowie innerhalb einer spezifischen Umgebung (z.B. spezielle Box/Palettenbox) ermittelt und ausgewertet werden. Dies dient nicht nur der Kontrolle und Verbesserung der Wirkstoffabgabe, sondern kreiert darüber hinaus ebenfalls wertvolle Daten für den Anwender sowie dessen Kunden, der mithilfe der Daten eine bessere Übersicht und Einblick über die produkttechnisch relevanten Teile der Lieferkette erhalten kann. Zudem können auch die einzelnen Wirkstoffabgabemodule geortet werden, sodass beispielsweise eine 3D-Abbildung der im Lagervolumen befindlichen Wirkstoffabgabegeräte erzeugt werden kann.

Weitere vorteilhafte Ausgestaltungen der vorliegenden Erfindung sind den übrigen Unteransprüchen zu entnehmen.

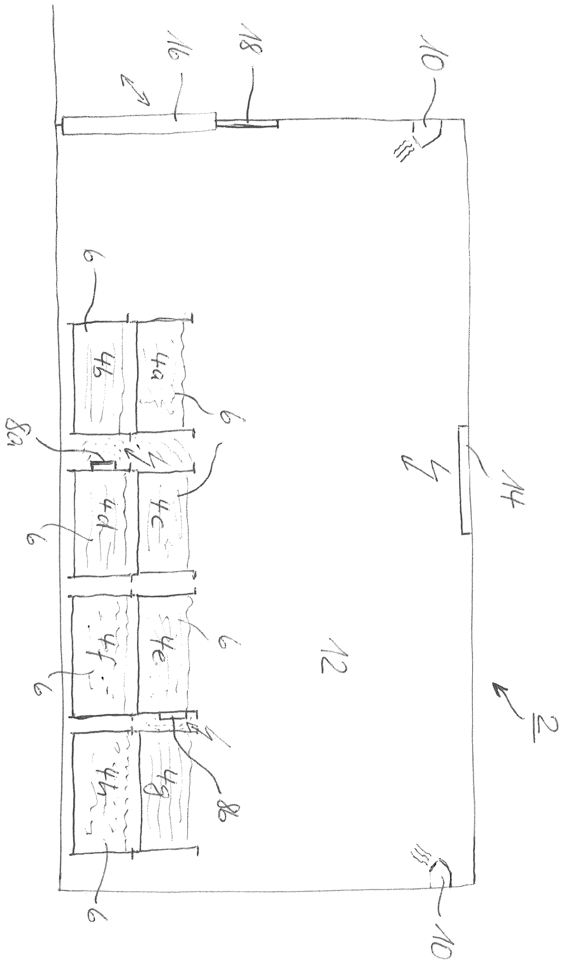

Vorteilhafte Ausgestaltungen der vorliegenden Erfindung werden nachfolgend mit Bezug auf die anhängenden Zeichnungen näher erläutert. Dabei zeigt die Figur schematisch ein Lagerhaus mit einer Anzahl von eingelagerten Palettenboxen für ein Ernteerzeugnis, wie z.B. Kartoffeln, Äpfeln etc. Die bei der vorliegenden Erfindung eingesetzte Technologie einer elektrochemischen Gasentwicklungszelle - gattungsgemässe Gasentwicklungszellen sind beispielsweise aus der deutschen Offenlegungsschrift 35 32 335 und der europäischen Patentanmeldung EP 1 396 899 A2 bekannt - eignet sich zur Bereitstellung eines Produkts für die gezielte und wirkstoffsparende Abgabe zum Beispiel von pharmakologisch aktiven Mitteln zur Behandlung von Ernteerzeugnissen, wie z.B. Keimhemmungsmittel zum Schutz von Ernteerzeugnissen gegen Keimung, aber ebenso beispielsweise Fungizide gegen den Befall von Pilzen. Aufgrund der geringen Baugrösse, der einfachen Bauweise, der autarken Funktionsweise und der Steuerbarkeit der Wirkstoffabgabe durch eine sehr einfache elektronische Schaltung ist so ein System realisierbar, das nach definierbaren und festlegbaren Kriterien Wirkstoffe räumlich verteilt abgibt und dadurch deutlich weniger Wirkstoff und Ressourcen verbraucht als bestehende Systeme. Zudem lässt sich die Gasentwicklungszellen-Technologie durch zusätzliche elektronische Elemente, wie beispielsweise Sensoren und/oder Steuerprogramme erweitern, um das System noch effizienter und intelligenter zu gestalten oder weitere Steuer- und Programmierfunktionalität zur Verfügung zu stellen. Ausserdem lässt sich durch den modulartigen Aufbau des Systems eine hohe Wiederverwendbarkeit aller Bauteile erzielen. Im die Gasentwicklungszelle umfassenden ersten Treibermodul müssen nur die Batterien von Zeit zu Zeit ersetzt werden. Im Wirkstoffmodul ist ein neuer Wirkstoffbehälter vorzusehen, wobei der entleerte Behälter sogar rezyklierbar ausgestaltet sein kann. Die restlichen Module können unter Umständen, ggfs. durch eine kurze Reinigungsphase unterbrochen, mehr oder weniger permanent eingesetzt werden.

Die Figur zeigt schematisch ein Lagerhaus 2 mit einer Anzahl von eingelagerten Gitterboxen 4a bis 4h zur Lagerung von Obst 6 und/oder Gemüse. Von den hier beispielshaft gezeigten Gitterboxen 4a bis 4h ist hier vorliegend jede vierte Gitterbox, hier 4d und 4e mit einem Wirkstoffabgabemodul 8a bzw. 8b ausgerüstet. Die Dichte der im Lagervolumen 12 dezentral und verteilt angeordneten Wirkstoffabgabemodule hängt dabei letztlich von einer Vielzahl von Faktoren ab, wie z.B. Soll-Konzentration des Wirkstoffs, Wirkstoffabgabevermögen der Wirkstoffabgabemodule, gewünschte Homogenität der Wirkstoffkonzentration über die eingelagerten Obst- und/oder Gemüsemengen etc.

Das Lagerhaus verfügt weiter über Mittel 10 zur Klimatisierung des Lagervolumens 12 und über eine Kontrolleinheit 14, die einerseits für die Lagerung des Obsts und/oder Gemüses relevante Parameter misst und andererseits mit den Wirkstoffabgabemodulen 8a, 8b bidirektional Daten austauschen kann. Zudem weist das Lagerhaus 2 ein Tor 16 und eine mit diesem Tor 16 assoziierte Sensoreinheit 18 auf, die einerseits mittels einer Nahfeldkommunikation (Near Field Communication NFC) mit den Steuereinheiten der Wirkstoffabgabemodule 8a, 8b kommuniziert und so beispielsweise selbsttätig lernt, welche Wirkstoffabgabemodule in das Lagerhaus 2 eingeführt bzw. aus diesem auch wieder entfernt werden und andererseits beispielsweise mit der Kontrolleinheit 14 kommuniziert, um der Kontrolleinheit 14 den Bestand an Wirkstoffabgabemodulen 8a, 8b innerhalb des Lagervolumens 12 mitzuteilen. Ergänzend wäre es hier auch möglich, dass die Wirkstoffabgabemodule bei der Einführung in das Lagervolumen eingeschaltet und bei der Entfernung entsprechend ausgeschaltet werden.

Zur zweckmässigen Abgabe des Wirkstoffs kann das Steuerungsmodul beispielsweise ertüchtigt sein, die Gasungsrate in Abhängigkeit von der Tageszeit und/oder der Luftfeuchtigkeit und/oder der Temperatur und/oder den Konditionen im Lagervolumen (Pilzsporenkonzentration, Auftreten von Indikatoren für Fäule etc.) und/oder durch gezielten manuellen Eingriff und/oder durch die drahtlose Steuerung von der Kontrolleinheit 14 an alle Wirkstoffabgabemodule 8a, 8b bzw. an einzelne individuell adressierbare Wirkstoffabgabemodule einzustellen.

Weiter können die Wirkstoffabgabemodule auch als Applikationselement eine Struktur zur Abgabe des Wirkstoffs aufweisen, wobei der Wirkstoff dann durch Kontakt auf einer Kontaktoberfläche und/oder durch Verdampfung/Diffusion abgegeben wird. Es ist auch denkbar, das Wirkstoffabgabemodul mit einem Zerstäuber und/oder Ventilator auszurüsten, sodass der Wirkstoff fein verteilt und/oder zusätzlich verdüst werden kann.

Um die modulartige Bauweise des Systems in Bezug auf den Zusammenbau und die Zerlegung besonders einfach gestalten zu können, kann es vorgesehen sein, dass die Verbindung des Treibermoduls mit dem Wirkstoffmodul und/oder die Verbindung des Wirkstoffmoduls mit einem weiteren Modul (z.B. Modul mit Kontaktoberfläche) als Steckverbindung oder als Rastverbindung oder als Bajonett-Verbindung oder als Schraubverbindung ausgestaltet ist.

Die vorliegende Erfindung nutzt das Förderprinzip der Verdrängung mittels Gases, um Wirkstoffe, wie z.B. essenzielle Öle, aus einem ein Wirkstofffluid enthaltenden Behältnis an einen Auslass für das Wirkstofffluid und ggfs. zu einem Applikationselement, wie z.B. ein Verdunstungs-Element, hinzufördern, so dass der Wirkstoff in unmittelbare Nähe zu dem eingelagerten Obst und/oder Gemüse abgegeben wird. Durch das Fördern des Wirkstoffs mittels der steuerbaren elektrochemischen Gasentwicklungszelle kann der Wirkstoff sehr sparsam und in einer optimal auf das Verhalten des Erntegutes (Obst, Gemüse, etc.) sowie auf möglichen Pilzbefall und/oder Schädlingsbefall abgestimmten Dosierung abgegeben werden. Das Prinzip kann beispielsweise auf Verdunstung des Wirkstoffs über die Oberfläche des Verdunstungs-Elements beruhen, jedoch ist auch eine semi-aktive (z.B. Kombination mit einem Ventilator) oder aktive (z.B. erwärmte Oberfläche, Vernebelung via Ultraschall etc.) Verdunstung denkbar.

Die Steuerung der Abgabemenge des Wirkstoffs und seiner Abgabezeit wird über das elektronisches Steuerungsmodul, allenfalls ausgerüstet mit einer Zeit-Steuerung, einer Stromregelung zur Erzielung einer einstellbaren Gasungsrate und Sensoren (Temperatur, Helligkeit, Feuchte, etc.) eingestellt. In einer besonders einfachen Art und Weise kann die Stromregelung und damit die Gasungsrate über einen Photowiderstand realisiert werden. Auch ist der Einbau eines Kommunikations-Elements, z.B. zum externen respektive zentralen Starten der Wirkstoff-Abgabe oder für eine Vernetzung mehrerer dieser Wirkstoffabgabemodule denkbar. Ebenfalls kann das Abgabegerät aktiviert bzw. deaktiviert werden, indem eine Kommunikation mit der Lagertür und oder einem anderen vorgesehenen Punkt stattfindet. Beim Öffnen der Tür, beim Durchqueren des Lagertors mittels eines Flurförderfahrzeuges oder ähnlichem kann die Dosierung gestartet, geändert oder gestoppt werden.

Grundsätzlich eignet sich die vorliegende Erfindung auch zur Pilzbekämpfung oder ähnlichem Befall (Bakterien, Viren) in Lagerhäusern. Neben der Aufrechterhaltung der Qualität von eingelagerten Produkten kann das System auch zur Lagerung von Ernteerzeugnissen eingesetzt werden, bei der eine Bekämpfung von Pilzbefall im Lagerhaus (auch Bakterien- und/oder Virenbefall) erwünscht sein kann. Die Sensorik, die mit in die Steuerungseinheit des Wirkstoffabgabemoduls integriert sein kann, ermöglicht eine frühzeitige Erkennung von Feuchtigkeits- und Temperaturänderungen, die auf potenzielle Probleme hinsichtlich eines Pilzbefalls hinweisen könnten und ermöglicht so eine rechtzeitige Intervention. Dabei können auch zusätzlich oder auch nur ergänzend weitere Sensoren beispielsweise zur Messung der Konzentration von Pilzsporen eingesetzt werden, die entweder ihre Daten an die Kontrolleinheit 14, die dann global alle Wirkstoffabgabemodule anspricht (oder auch nur individuell ganz bestimmt). Ebenso können diese Sensoren (diese Sensorik) auch direkt die Gasungsrate in einem damit assoziierten Wirkstoffabgabemodul einstellen.

## Patentansprüche

1. Verfahren zur Freisetzung eines Wirkstoffs zur Erhaltung und/oder Verbesserung der Lager- und/oder Transportfähigkeit von pflanzlichen und/oder tierischen Produkten, welches die folgenden Verfahrensschritte umfasst:
a) Bestimmen einer Soll-Konzentration des Wirkstoffs innerhalb eines vorbestimmbaren Lager- und/oder Transportvolumens und/oder eines zeitlichen Verlaufs einer Soll-Konzentration des Wirkstoffs innerhalb eines vorbestimmbaren Lager- und/oder Transportvolumens;
b) räumlich verteiltes Anordnen von Wirkstoffabgabemodulen zur Wirkstoffabgabe innerhalb des Lager- und/oder Transportvolumens in Abhängigkeit von der Soll-Konzentration des Wirkstoffs und/oder von dem zeitlichen Verlauf der Soll-Konzentration des Wirkstoffs;
c) Ausrüsten der Wirkstoffabgabemodule zur Wirkstoffabgabe mit jeweils einem ersten Treibermodul, umfassend eine elektrochemische Gasentwicklungszelle und ein die Gasungsrate des von der Gasentwicklungszelle generierten Gases steuerndes Steuerungsmodul und ein mit dem ersten Treibermodul verbindbares zweites Wirkstoffmodul, umfassend einen Behälter für das den Wirkstoff enthaltende Wirkstofffluid mit einem Wirkstoffauslass, wobei ein von dem mittels der Gasentwicklungszelle generierten Gases aufgebauter Förderdruck eine Wirkstoffabgabe an den Wirkstoffauslass bewirkt; und
d) Einstellen der gewünschten Gasungsrate bzw. des gewünschten Verlaufs der Gasungsrate an den Steuerungsmodulen zur Abgabe des Wirkstofffluids zur Erreichung der Soll-Konzentration des Wirkstoffs und/oder des zeitlichen Verlaufs der Soll-Konzentration des Wirkstoffs.

2. Verfahren nach Anspruch 1,
**dadurch gekennzeichnet, dass**
mindestens eine Anzahl der Steuerungsmodule über eine drahtlose Kommunikation von einer Kontrolleinheit angesteuert werden.

3. Verfahren nach Anspruch 1 oder 2,
mindestens eine Detektionseinheit zur Messung der Konzentration des Wirkstoffs und/oder zur Messung von produktspezifischen Parametern, wie z.B. Temperatur, Luftdruck, Luftfeuchtigkeit, Pilzsporenkonzentration, Bakterienkonzentration, Insektenbefall, etc., innerhalb des Lager- und/oder Transportvolumens angeordnet wird.

4. Verfahren nach Anspruch 3, **dadurch gekennzeichnet, dass** die von der Detektionseinheit gemessenen Werte zur Rückkopplung der Dosierung des Wirkstoffs von der Kontrolleinheit zur Steuerung eines oder mehrerer der Steuerungsmodule verwendet wird.

5. Verfahren nach Anspruch 3 oder 4, **dadurch gekennzeichnet, dass** die von der Detektionseinheit gemessenen Werte zur Rückkopplung der Dosierung des Wirkstoffs direkt zur Steuerung eines oder mehrerer der Steuerungsmodule, die mit dieser Detektionseinheit assoziiert sind, verwendet wird.

6. System zur Freisetzung eines Wirkstoffs zur Erhaltung und/oder Verbesserung der Lager- und/oder Transportfähigkeit von pflanzlichen und/oder tierischen Produkten, welches die folgenden Komponenten umfasst:
a) eine Kontrolleinheit zum Bestimmen einer Soll-Konzentration des Wirkstoffs innerhalb eines vorbestimmbaren Lager- und/oder Transportvolumens und/oder eines zeitlichen Verlaufs einer Soll-Konzentration des Wirkstoffs innerhalb eines vorbestimmbaren Lager- und/oder Transportvolumens;
b) räumlich innerhalb des Lager- und/oder Transportvolumens verteilte Wirkstoffabgabemodule zur Wirkstoffabgabe in Abhängigkeit von der Soll-Konzentration des Wirkstoffs und/oder von dem zeitlichen Verlauf der Soll-Konzentration des Wirkstoffs;
c) mindestens eines der Wirkstoffabgabemodule zur Wirkstoffabgabe umfassend ein Treibermodul, welches eine elektrochemische Gasentwicklungszelle und ein die Gasungsrate des von der Gasentwicklungszelle generierten Gases steuerndes Steuerungsmodul umfasst und ein mit dem Treibermodul verbindbares Wirkstoffmodul, welches einen Behälter für das den Wirkstoff enthaltende Wirkstofffluid mit einem Wirkstoffauslass umfasst, wobei ein von dem mittels der Gasentwicklungszelle generierten Gases aufgebauter Förderdruck eine Wirkstoffabgabe an den Wirkstoffauslass bewirkt; und wobei
d) die gewünschte Gasungsrate bzw. der gewünschte Verlauf der Gasungsrate an den Steuerungsmodulen zur Abgabe des Wirkstofffluids zur Erreichung der Soll-Konzentration des Wirkstoffs und/oder des zeitlichen Verlaufs der Soll-Konzentration des Wirkstoffs einstellbar ist.

7. System nach Anspruch 6,
**dadurch gekennzeichnet, dass**
mindestens eine Anzahl der Steuerungsmodule über eine drahtlose Kommunikation von der Kontrolleinheit ansteuerbar ist.

8. System nach Anspruch 6 oder 7,
mindestens eine Detektionseinheit zur Messung der Konzentration des Wirkstoffs und/oder zur Messung von produktspezifischen Parametern, wie z.B. Temperatur, Luftdruck, Luftfeuchtigkeit, Pilzsporenkonzentration, Bakterienkonzentration, Insektenbefall, etc., innerhalb des Lager- und/oder Transportvolumens angeordnet ist.

9. System nach Anspruch 8, **dadurch gekennzeichnet, dass** die von der Detektionseinheit gemessenen Werte zur Rückkopplung der Dosierung des Wirkstoffs von der Kontrolleinheit zur Steuerung eines oder mehrerer der Steuerungsmodule verwendbar ist.

10. System nach Anspruch 8 oder 9, **dadurch gekennzeichnet, dass** die von der Detektionseinheit gemessenen Werte zur Rückkopplung der Dosierung des Wirkstoffs direkt zur Steuerung eines oder mehrerer der Steuerungsmodule, die mit dieser Detektionseinheit assoziiert sind, verwendbar ist.
